# FASCICULE DE BREVET EUROPEEN

(11) **EP 3 595 145 B1**
(45) Date de publication et mention de la délivrance du brevet: **26.05.2021**
(21) Numéro de dépôt: 19184030.5
(22) Date de dépôt: 02.07.2019
(51) Int. Cl.: H02K 13/00, H02K 23/04, H02K 5/14, H02K 5/10

(54) **MACHINE A COURANT CONTINU A BALAIS**
GLEICHSTROMMASCHINE MIT BÜRSTEN
DIRECT CURRENT MACHINE WITH BRUSHES

(30) Priorité: 10.07.2018 FR 1856358
(43) Date de publication de la demande: 15.01.2020
(73) Titulaire: Crouzet Automatismes, 26000 Valence (FR)
(72) Inventeur: TRANIER, Damien, 26000 VALENCE (FR); TAMAGNA, Dominique, 26000 VALENCE (FR)
(74) Mandataire: Colombo, Michel

(56) Documents cités:
- DE-A1- 2 259 900
- JP-A- 2003 111 371
- JP-A- 2005 151 618
- JP-U- H0 631 355
- RU-U1- 64 827

## Description

L'invention concerne une machine à courant continu à balais présentant un indice de protection supérieur ou égal à l'indice IP54 et adaptée pour être alimentée par une tension d'alimentation supérieure à 72 Vdc.

De telles machines à courant continu à balais connues comportent :
- un stator équipé :
   - d'aimants permanents ou d'enroulements statoriques aptes à induire un flux magnétique,
   - d'un premier et d'un second flasques d'extrémité comportant, respectivement, un premier et un second moyeux,
   - de balais,
- un rotor bobiné équipé :
   - d'enroulements rotoriques,
   - d'un arbre, et
   - d'un collecteur situé en vis-à-vis des balais du stator et sur lequel les balais frottent pour alimenter les enroulements rotoriques,
- un premier et un second roulements dans lesquels sont montées des extrémités respectives de l'arbre, ces premier et second roulements étant reçus à l'intérieur, respectivement, des premier et second moyeux.
Une telle machine est par exemple divulguée dans la demande RU64824U1.

Dans ces machines à courant continu, le frottement des balais sur le collecteur génère de la poussière conductrice comme, par exemple, de la poussière de charbon. Plus précisément, la poussière conductrice est généralement générée par des arcs électriques qui apparaissent entre les balais et le collecteur au moment des commutations du sens du courant dans les enroulements rotoriques. Ainsi, plus la tension d'alimentation de la machine à courant continu est élevée, plus la quantité de poussière conductrice générée augmente.

Si rien de particulier n'est fait, cette poussière conductrice se dépose sur les différents composants de la machine et, en particulier, sur les matériaux isolants de cette machine. Ce dépôt crée alors ce que l'on appelle des lignes de fuite entre des points de la machine à différents potentiels. Les lignes de fuite les plus gênantes sont généralement les lignes de fuite qui peuvent apparaître entre le potentiel du collecteur et la masse. Ces lignes de fuite diminuent d'autant plus la résistance au claquage de la machine qu'elles sont courtes. Ce dépôt de poussière conductrice sur les matériaux isolants de la machine peut aussi diminuer la distance la plus courte dans l'air entre deux composants conducteurs à des potentiels différents. Cela contribue aussi à diminuer la résistance au claquage de la machine.

Le claquage est une rupture instantanée des propriétés diélectriques d'un milieu isolant. Tout claquage entraîne une détérioration plus ou moins importante de la machine à courant continu. La résistance au claquage d'une machine est mesurée, pour une différence de potentiels de référence, entre différents potentiels de la machine. Par exemple, le test d'isolation électrique est fait pour une différence de potentiels de référence typiquement de 1 000 Vdc ou de 2 000 Vdc.

Pour accroître la résistance au claquage des machines à courant continu à balais, il a déjà été proposé de diminuer leur tension d'alimentation. En effet, cette diminution de la tension d'alimentation diminue la quantité produite de poussière conductrice. Toutefois, il n'est pas toujours possible ou souhaitable de réduire la tension d'alimentation de la machine à courant continu. En particulier, ce type de solution n'est pas applicable aux machines à courant continu alimentées en haute tension, c'est-à-dire alimentées avec une tension continue supérieure à 72 Vdc.

Il a aussi été proposé d'équiper les machines à courant continu à balais d'évents et d'un ventilateur. Le ventilateur crée un courant d'air à l'intérieur de la machine qui entraîne les particules conductrices vers les évents et les évacue à l'extérieur de la machine par l'intermédiaire de ces évents. Par exemple, de tels ventilateurs, utilisés en combinaison avec des évents, sont décrits dans JP203111371A et JPH0631355U. Toutefois, cette solution est toujours décrite comme étant intimement liée à la présence d'évents pour évacuer vers l'extérieur les particules conductrices. Dans ces conditions, cette solution ne semble pas applicable aux machines qui sont étanches à la poussière et aux projections d'eau. En effet, il n'est pas possible d'intégrer des évents dans ces machines étanches tout en conservant leur étanchéité à la poussière et aux projections d'eau.

Enfin, il a aussi déjà été proposé d'équiper les machines à courant continu à balais d'écrans qui limitent le dépôt de poussière conductrice sur certains composants de la machine judicieusement choisis pour maintenir une résistance au claquage appropriée même après plusieurs dizaines d'heures de fonctionnement. Toutefois, jusqu'à présent, selon l'emplacement et la forme de ces écrans, leur efficacité est plus ou moins bonne pour améliorer la résistance au claquage de la machine. Par exemple, de tels écrans sont divulgués dans JP203111371A, JP2005151618A, JPH0631355U et DE2259900A1.

L'invention vise à proposer une machine à courant continu à balais adaptée pour être alimentée par une tension d'alimentation supérieure à 72 Vdc et présentant à la fois un indice de protection supérieur ou égal à l'indice IP54 et une résistance au claquage améliorée.

Elle a donc pour objet une telle machine à courant continu à balais conforme à la revendication 1.

Les modes de réalisation de cette machine à courant continu à balais peuvent comporter une ou plusieurs des caractéristiques des revendications dépendantes.

L'invention sera mieux comprise à la lecture de la description qui va suivre, donnée uniquement à titre d'exemple non limitatif et faite en se référant aux dessins sur lesquels :
- la figure 1 est une illustration schématique en coupe longitudinale d'une machine à courant continu à balais ;
- la figure 2 est une illustration schématique, en coupe longitudinale et en perspective, d'une extrémité inférieure de la machine de la figure 1 ;
- la figure 3 est une illustration schématique, en perspective, d'une rondelle de la machine de la figure 1 ;
- la figure 4 est une illustration schématique, en perspective, d'un flasque d'extrémité de la machine de la figure 1 ; et
- la figure 5 est une illustration schématique, en perspective et en coupe longitudinale, du flasque de la figure 4.

Dans ces figures, les mêmes références sont utilisées pour désigner les mêmes éléments. Dans la suite de cette description, les caractéristiques et fonctions bien connues de l'homme du métier ne sont pas décrites en détail.

### Chapitre I : Exemple de modes de réalisation

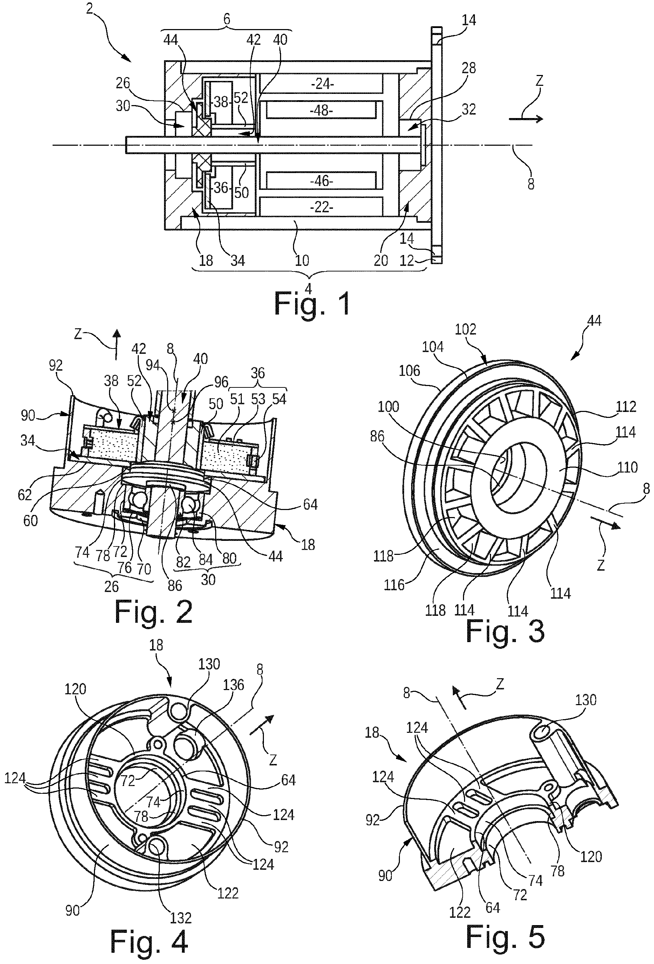

La figure 1 représente une machine 2 à courant continu à balais. Dans ce mode de réalisation, la machine 2 est une machine à excitation constante utilisée en tant que moteur. La machine 2 est conçue pour être alimentée en haute tension continue. Dans cet exemple, la machine 2 est alimentée avec une tension supérieure ou égale à 110 Vdc ou 220 Vdc.

La machine 2 décrite ici est destinée au domaine ferroviaire. Par exemple, elle est destinée à être installée dans des trains. Pour être utilisable dans le domaine ferroviaire, la machine 2 présente un indice de protection supérieur ou égal à l'indice IP54. La machine 2 est donc étanche vis-à-vis des poussières et des résidus microscopiques. La machine 2 est également étanche vis-à-vis des projections d'eau provenant de toute direction. Par la suite, sauf indication contraire, le terme « étanche » désigne une étanchéité correspondant à un indice de protection supérieur ou égal à l'indice IP54.

Pour atteindre cet indice de protection, les parois de la machine 2 forment une enceinte étanche aux poussières microscopiques et aux projections d'eau. A cet effet, notamment, la machine 2 est dépourvue d'évents à travers lesquels la poussière ou l'eau peut s'infiltrer. De façon réciproque, la poussière conductrice générée par le frottement des balais sur le collecteur ne peut pas traverser cette enceinte et ne peut donc pas être évacuée vers l'extérieur de la machine 2.

Ici, la machine 2 est en plus conçue pour présenter une résistance au claquage sous une tension de 2 000 Vdc. De préférence, cette résistance au claquage doit être conservée même après plus de 100 heures et, de préférence, même après plus de 400 heures de fonctionnement de la machine 2. La résistance au claquage est typiquement mesurée entre les points de la machine 2 entre lesquels la différence de potentiels, lors du fonctionnement de la machine, est maximale. Il s'agit donc en particulier de la résistance au claquage entre le collecteur et les roulements et/ou l'armature de la machine 2. Les principales caractéristiques qui permettent d'atteindre cet objectif de résistance au claquage sont décrites plus loin.

La machine 2 comporte un stator fixe 4 et un rotor 6 mobile monté à rotation autour d'un axe 8. Ici, l'axe 8 s'étend parallèlement à une direction Z. Dans le cas particulier décrit ici, la direction Z est par exemple verticale. Ainsi, par la suite, les termes tels que « supérieur », « inférieur », « au-dessus », « au-dessous » sont définis par rapport à cette direction Z.

Le stator 4 comporte une armature 10 tubulaire et rigide. L'armature 10 est typiquement réalisée dans un matériau métallique comme de l'acier. Sa section transversale est circulaire et centrée sur l'axe 8. Dans cette description, par « section transversale » ou « plan transversal » on désigne une section, respectivement un plan, perpendiculaire à l'axe 8.

Le stator 4 comporte une platine 12 de fixation de la machine 2. Cette platine 12 est fixée sans aucun degré de liberté sur l'extrémité supérieure de l'armature 10. Par exemple, cette platine 12 comporte des trous traversants 14 pour le passage de vis de fixation de la machine 2. La platine 12 est par exemple rectangulaire ou carrée.

Le stator 4 comporte aussi :
- deux flasques d'extrémité 18 et 20 obturant chacun, respectivement, les extrémités inférieure et supérieure de l'armature 10, et
- des aimants permanents fixés sans aucun degré de liberté sur une face intérieure de l'armature 10 tournée vers l'axe 8.

Les aimants permanents sont par exemple régulièrement répartis le long de la périphérie circulaire intérieure de l'armature 10 et en alternant les polarités de ces aimants permanents. Ces aimants permanents génèrent le champ magnétique fixe nécessaire au fonctionnement de la machine 2. Sur la figure 1, seuls deux aimants permanents 22 et 24 sont représentés.

Les flasques 18 et 20 sont fixés sans aucun degré de liberté sur les extrémités respectives de l'armature 10. Ici, ces flasques 18 et 20 sont entièrement réalisés dans un matériau isolant. Par la suite, par « matériau isolant » ou « matériau électriquement isolant », on désigne un matériau dont la résistivité électrique à 20°C est supérieure à 10⁵Ω.m et, de préférence, supérieure à 10¹⁰Ω.m ou 10¹⁶Ω.m.

Ici, le flasque 18 est formé d'un seul bloc en matériau isolant. Le flasque 20 est quant à lui formé d'un seul bloc en matériau isolant ou en matériau conducteur.

Chaque flasque 18, 20 comporte un moyeu central, respectivement, 26 et 28. Des roulements 30, 32 sont logés à l'intérieur, respectivement, des moyeux 26 et 28. Par exemple, ici, les roulements 30 et 32 sont des roulements à billes.

Une plaque circulaire 34 est fixée sans aucun degré de liberté sur le flasque 18 et des balais sont montés sur cette plaque 34. La plaque 34 est réalisée en matériau isolant. Elle s'étend principalement dans un plan transversal. Sur la figure 1 et sur les figures suivantes, seuls deux balais 36 et 38 sont représentés. Chacun de ces balais alimente des enroulements rotoriques correspondant du rotor 6.

Le rotor 6 comporte un arbre 40 de révolution qui s'étend le long de l'axe 8 et qui est centré sur l'axe 8. Les extrémités inférieure et supérieure de l'arbre 40 sont reçues à l'intérieur, respectivement, des roulements 30 et 32. Ainsi, l'arbre 40 est libre de tourner autour de l'axe 8 par rapport aux flasques 18 et 20. La section transversale de l'arbre 40 est typiquement circulaire.

Le rotor 6 comporte également, montés sans aucun degré de liberté sur l'arbre 40, :
- des enroulements rotoriques,
- un collecteur 42, et
- une rondelle déflectrice 44.

Sur la figure 1, seuls deux enroulements rotoriques 46 et 48 sont schématiquement illustrés. Ces enroulements rotoriques sont situés en vis-à-vis des aimants permanents du stator de manière à ce qu'une force de Laplace s'exerce sur les conducteurs électriques de ces enroulements lorsqu'ils sont parcourus par un courant continu. Ce sont ces forces qui entraînent le rotor 6 en rotation autour de l'axe 8.

Le collecteur 42 comporte une multitude de lamelles chacune individuellement raccordée électriquement à une extrémité respective d'un des enroulements rotoriques. Ces lamelles s'étendent principalement dans la direction Z. Pour simplifier la figure 1, seules deux lamelles 50 et 52 sont représentées sur la figure 1. Les lamelles sont typiquement réparties à intervalle régulier sur le pourtour du collecteur 42. Ces lamelles sont mécaniquement isolées les unes des autres par un matériau isolant. Plus précisément, ces lamelles sont agencées sur la périphérie du collecteur 42 et raccordées aux enroulements rotoriques de manière à ce que le sens du courant continu qui circule dans chaque enroulement rotorique s'inverse au moins une fois par tour complet du rotor 6.

Les lamelles sont disposées en vis-à-vis des balais 36, 38 de sorte que ces balais 36 et 38 frottent sur ces lamelles lorsque le rotor 6 tourne. Par la suite, le diamètre de la périphérie extérieure du collecteur 42 sur lequel frottent les balais 36 et 38 est noté D₄₂.

La rondelle 44 est interposée entre le collecteur 42 et le roulement 30. Ici, elle a notamment pour fonction d'augmenter la résistance au claquage entre le collecteur 42 et le roulement 30. A cet effet, elle est entièrement réalisée en matériau isolant. Cette rondelle 44 est décrite plus en détail en références à la figure 3.

La figure 2 représente plus en détail la partie inférieure de la machine 2. Les balais 36 et 38 sont par exemple structurellement identiques et seul le balai 36 est décrit plus en détail ici. Le balai 36 comporte un tampon conducteur 51 monté à coulissement à l'intérieur d'un logement rectiligne 53. Le tampon 51 coulisse à l'intérieur du logement 53 le long d'une direction radiale perpendiculaire à l'axe 8. Le tampon 51 est sollicité en permanence contre les lamelles du collecteur 42 par un ressort 54. Le tampon 51 est raccordé à l'alimentation électrique de la machine 2, par exemple, par l'intermédiaire du ressort 54. Pour simplifier les figures, les câbles d'alimentation électriques des balais ne sont pas représentés. Le tampon 51 est réalisé dans un matériau conducteur, c'est-à-dire ici un matériau dont la résistivité électrique à 20°C est inférieure à 10⁻⁴Ω.m et, de préférence, inférieure à 10⁻⁵Ω.m ou 10⁻⁶Ω.m. Pour cela, généralement, ce tampon 51 comporte du carbone. Ce sont les frottements du tampon 51 sur les lamelles du collecteur 42 qui produisent la poussière conductrice à l'intérieur de l'enceinte de la machine 2.

Les balais 36 et 38 sont montés sans aucun degré de liberté sur la plaque 34 par soudure ou tout autre moyen approprié. La plaque 34 a ici la forme d'un disque. Ce disque comporte un orifice central 60 centré sur l'axe 8 et traversé par l'arbre 40. Le diamètre de l'orifice 60 est noté par la suite D₆₀. Le diamètre D₆₀ est ici supérieur au diamètre D₄₂. Par exemple, le diamètre D₆₀ est supérieur ou égal à D₄₂+ε, où ε est compris entre 2 mm et 5 mm. Par la suite, le diamètre extérieur de la plaque 34 est noté D₃₄.

La plaque 34 est fixée, par exemple à l'aide de vis ou de tout autre moyen, sur un fond 62 du flasque 18. Le fond 62 est tourné vers le collecteur 42 et s'étend principalement parallèlement à un plan transversal. En son centre, le fond 62 comporte une ouverture circulaire 64 qui correspond à l'emplacement où débouche le moyeu 26. Cette ouverture circulaire 64 est donc centrée sur l'axe 8. Le diamètre de l'ouverture 64 est noté par la suite D₇₄. Ici, le diamètre D₇₄ est supérieur au diamètre D₆₀ de l'orifice 60.

Dans ce mode de réalisation, le moyeu 26 est formé de trois sections tubulaires 70, 72 et 74 successives en allant dans la direction Z. La section transversale de chacune de ces sections tubulaires est un cercle centré sur l'axe 8. Le diamètre de la section transversale 74 est égal au diamètre D₇₄ de l'ouverture 64. Le diamètre D₇₂ de la section tubulaire 72 est inférieur au diamètre D₇₄. Le diamètre de la section tubulaire 70, noté D₇₀, est inférieur au diamètre D₇₂. Par conséquent, les sections tubulaires 70 et 72 sont séparées l'une de l'autre par un premier épaulement 76. Les sections tubulaires 72 et 74 sont séparées l'une de l'autre par un second épaulement 78.

La section tubulaire 70 est traversée de part en part seulement par l'arbre 40 et séparée de l'arbre 40 par un jeu supérieur à 1 mm de large. A cet effet, le diamètre D₇₀ est supérieur au diamètre de l'arbre 40.

Le roulement 30 est reçu à l'intérieur de la section tubulaire 72. Plus précisément, le roulement 30 comporte :
- une bague extérieure 80 directement en appui mécanique sur la paroi de la section tubulaire 72,
- une bague intérieure 82 directement en appui mécanique sur la périphérie de l'extrémité inférieure de l'arbre 40, et
- des corps de roulement 84, tels que des billes ou des rouleaux, interposés entre les bagues 80 et 82.

Typiquement, le roulement 30 comporte également une cage, non représentée sur la figure 2, qui maintient un espace constant entre les corps de roulement 84.

Ici, l'épaulement 76 forme une butée sur laquelle seule la bague extérieure 80 vient en appui lorsque le roulement 30 est enfoncé, dans la direction opposée à la direction Z, à l'intérieur de la section tubulaire 72. Sur la figure 2, un jeu axial est représenté entre l'épaulement 76 et la bague extérieure 80. Toutefois, ce jeu n'existe pas lorsque le roulement 30 est complètement enfoncé à l'intérieur de la section tubulaire 72 comme c'est le cas une fois que l'assemblage de la machine 2 est terminé.

La rondelle 44 est seulement reçue à l'intérieur de la section tubulaire 74. La rondelle 44 comporte ici une partie arrière 86 tournée vers le roulement 30. Cette partie 86 est directement et seulement en appui mécanique sur la bague intérieure 82 du roulement 30. Cette partie arrière 86 forme ainsi une butée qui maintient le roulement 30 à l'intérieur de la section tubulaire 72. Par exemple, cette partie arrière 86 a la forme d'un disque plat dont le diamètre est égal ou sensiblement égal à celui de la bague intérieur 82.

Le flasque 18 comporte également une bordure 90 pour augmenter la longueur des lignes de fuite qui pourraient s'étendre entre le potentiel du collecteur 42 et le potentiel de l'armature 10. A cet effet, la bordure 90 fait le tour complet de la plaque 34 et du collecteur 42. La bordure 90 s'étend continûment le long de la périphérie extérieure du fond 62. Dans la direction Z, la bordure 90 s'étend continûment depuis le fond 62 jusqu'à une limite supérieure 92. La limite supérieure 92 est ici un plan transversal. La projection orthogonale de cette limite 92 sur l'axe 8 correspond à un point 94. Le collecteur 42 présente aussi une limite supérieure. Cette limite supérieure est le plan transversal qui contient l'extrémité supérieure des lamelles du collecteur 42. L'extrémité supérieure d'une lamelle est l'extrémité de cette lamelle la plus proche du flasque 20. La projection orthogonale de cette limite supérieure du collecteur 42 sur l'axe 8 correspond à un point 96. La hauteur de la bordure 90 est telle que le point 94 est confondu avec le point 96 ou situé au-dessus, dans la direction Z, du point 96. Ici, le point 94 est situé au-dessus du point 96. Par exemple, l'écart entre les points 94 et 96 est supérieur ou égal à 1 mm ou 3 mm ou 5 mm. Dans ces conditions, la bordure 90 allonge substantiellement les lignes de fuite susceptibles de raccorder électriquement le potentiel du collecteur 42 au potentiel de l'armature 10. La bordure 90 allonge aussi substantiellement la distance dans l'air la plus courte entre le potentiel du collecteur 42 et le potentiel de l'armature 10.

La figure 3 représente plus en détail la rondelle 44. La rondelle 44 comporte :
- un trou central 100 traversant de part en part la rondelle 44 et dans lequel est reçu l'arbre 40, et
- un disque central 102 présentant une face avant 104 tournée vers le collecteur 42 et une face arrière 106 tournée vers le roulement 30.

Le disque 102 s'étend principalement dans un plan transversal. Le disque 102 est entièrement situé à l'intérieur de la section tubulaire 74 du moyeu 26. Son diamètre D₁₀₂ est proche du diamètre D₇₄ de la section transversale 74. Ainsi, le jeu entre la périphérie extérieure du disque 102 et la périphérie intérieure en vis-à-vis de la section tubulaire 74 est inférieur à 1 mm et, de préférence inférieur à 0,5 mm. Par exemple, le diamètre D₁₀₂ est compris entre 15 mm et 40 mm et, de préférence, entre 20 mm et 30 mm. Le disque 102 forme un écran qui s'oppose au passage de la poussière conductrice en direction du roulement 30. De plus, le disque 102 allonge les lignes de fuite susceptibles d'apparaître entre le potentiel du collecteur 42 et le potentiel du roulement 30. Le disque 102 allonge aussi la distance la plus courte dans l'air entre ces deux potentiels.

La partie arrière 86 est en saillie sur la face arrière 106. Ici, la face arrière 106 est par exemple plane.

La face avant 104 comporte :
- une nervure circulaire intérieure 110 centrée sur l'axe 8,
- une nervure circulaire extérieure 112 centrée sur l'axe 8,
- des pales 114, et
- une gorge périphérique 116 centrée sur l'axe 8.

La nervure 110 s'étend continûment sur le pourtour du trou 100 et fait sailli en direction du collecteur 42. La nervure 110 s'étend, dans la direction Z, depuis la face avant 104 jusqu'à une limite supérieure contenue dans un plan transversal.

La nervure 112 entoure complètement la nervure 110 et fait également sailli en direction du collecteur 42. La nervure 112 s'étend, dans la direction Z, depuis la face avant 104 jusqu'à une limite supérieure contenue dans un plan transversal. La hauteur de la nervure 112 est ici inférieure à la hauteur de la nervure 110. Par exemple, la hauteur de la nervure 112 est inférieure d'au moins 0,5 mm ou 1 mm à la hauteur de la nervure 110. Par ailleurs, la hauteur de la nervure 112 est ici telle que sa périphérie extérieure se trouve en vis-à-vis de la périphérie intérieure de l'orifice 60 de la plaque 34 lorsque l'assemblage de la machine 2 est terminé. A cet effet, le diamètre extérieur D₁₁₂ de la nervure 112 est inférieur au diamètre D₆₀ de l'orifice 60. De préférence, les diamètres D₁₁₂ et D₆₀ sont tels que le jeu entre la périphérie extérieure de la nervure 112 et la périphérie intérieure en vis-à-vis de l'orifice 60 est inférieur à 1 mm ou à 0,5 mm. Ainsi, la nervure 112 participe aussi à rendre plus difficile le passage de la poussière conductrice vers le roulement 30.

La hauteur de la nervure 112 est par exemple supérieure à 1 mm ou 2 mm et, généralement, inférieure à 8 mm ou 5 mm.

La distance entre les nervures 110 et 112, mesurée le long d'un rayon de la rondelle 44 est de préférence supérieure à D₁₀₂/3 ou D₁₀₂/2.

La nervure 112 forme sur la face avant 104 de la rondelle 44 un récipient apte à retenir la poussière conductrice qui tombe sur cette face 104. Plus précisément, la poussière conductrice qui entre en contact avec la face 104 est entraînée par la force centrifuge vers la nervure 112 et plaquée contre cette nervure. La poussière conductrice ainsi stockée sur la face 104 est peu gênante à cet emplacement et ne dégrade pas ou très peu la résistance au claquage de la machine 2.

Les pales 114 font saillies, dans la direction Z, sur la face avant 104. Sur la figure 3, la référence numérique 114 n'a été indiquée que pour quelques-unes de ces pales 114 afin de ne pas surcharger cette figure. Les pales 114 sont configurées pour générer, lorsque la rondelle 44 tourne autour de l'axe 8, un courant d'air qui éloigne la poussière conductrice du roulement 30. A cet effet, les pales 114 sont uniformément réparties autour de l'axe 8. Le nombre de pales 114 est généralement supérieur à trois ou cinq et souvent inférieur à trente ou vingt. Dans ce mode de réalisation, chaque pale 114 s'étend depuis un côté intérieur, proche de l'axe 8 jusqu'à un côté extérieur plus éloigné de l'axe 8. Ici, les côtés intérieur et extérieur de chaque pale 114 sont directement accolés, respectivement, aux nervures 110 et 112. Ainsi, dans ce mode de réalisation, les pales 114 découpent le récipient formé par la nervure 112 en une multitude de compartiments 118. Cela améliore le stockage de la poussière conductrice sur la rondelle 44.

La gorge 116 est située à l'extérieur de la nervure 112 et entoure complètement la nervure 112. La gorge 116 est circulaire. Par exemple, sa profondeur est supérieure à 0,5 mm ou 1 mm. Cette gorge 116 permet d'allonger les lignes de fuite qui pourraient s'établir entre le potentiel du collecteur 42 et le potentiel du roulement 30. Elle améliore donc la résistance au claquage de la machine 2.

Les figures 4 et 5 représentent plus en détail le flasque 18. Sur ces figures, la section tubulaire 70 et l'épaulement 76 ne sont pas représentés. Le fond 62 comporte une nervure 120 qui s'étend continûment sur le pourtour de l'ouverture centrale 64. Cette nervure 120 s'étend continûment, dans la direction Z, depuis le fond 62 jusqu'à une limite supérieure comprise dans un plan transversal. Cette nervure 120 forme avec la bordure 90 une cavité 122 située sous la plaque 34. Cette cavité 122 est apte à stocker la poussière conductrice générée lors du fonctionnement de la machine 2. Le stockage de la poussière conductrice dans la cavité 122 ne dégrade pas ou très peu la résistance au claquage de la machine 2. A cet effet, la profondeur de la cavité 122, et donc la hauteur de la nervure 120, est supérieur à 0,5 mm ou 1 mm.

Dans ce mode de réalisation particulier, le fond 62 comporte d'autres nervures 124 qui divisent la cavité 122 en plusieurs compartiments. De façon similaire à ce qui a été indiqué pour les compartiments 118, cela améliore le maintien de la poussière conductrice piégée à l'intérieur de la cavité 122.

Pour que la poussière conductrice puisse atteindre la cavité 122, un passage est aménagé entre la périphérie extérieure de la plaque 34 et la paroi en vis-à-vis de la bordure 90. Par exemple, à cet effet, le diamètre D₃₄ de la plaque 34 est inférieur au diamètre D₉₀ de la bordure 90. Par exemple, les diamètres D₃₄ et D₉₀ sont choisis pour que la largeur de ce passage soit supérieure à 1 mm sur tout le pourtour de la plaque 34. C'est principalement le courant d'air créé par la rondelle 44 et les lignes de champ magnétique à l'intérieur de la machine 2, qui entraîne la poussière conductrice à travers ce passage pour qu'elle rejoigne la cavité 122 et y soit stockée.

Le flasque 18 comporte aussi des cheminées 130 et 132 de vissage destinées chacune à recevoir une vis respective de fixation du flasque 18 sur le stator 4. Ici, ces cheminées 130 et 132 s'étendent continûment depuis le fond 62 jusqu'à la limite supérieure 92. Chaque cheminée entoure complètement la vis de fixation qu'elle est destinée à recevoir. Étant donné que dans ces conditions, la hauteur des cheminées 130, 132 est telle que la projection orthogonale de leurs limites supérieures sur l'axe 8 est au-dessus du point 96, cela améliore la résistance au claquage entre le potentiel du collecteur 42 et le potentiel des vis reçues dans ces cheminées 130 et 132.

Comme visible sur la figure 4, le fond 62 peut également comporter un trou traversant 136 pour le passage des câbles d'alimentation des balais.

### Chapitre II : Variantes :

### Chapitre II.1 : Variantes de la rondelle :

En variantes, aucune partie de la rondelle n'est reçue à l'intérieur du moyeu 26. Par exemple, la rondelle est alors entièrement interposée entre la plaque 34 et le fond 62. Dans une autre variante, la totalité de la rondelle 44 est située à l'intérieur de la section tubulaire 74. Dans ce dernier cas, la nervure 112 n'est pas située en vis-à-vis de la périphérie de l'orifice central 60.

Dans un autre mode de réalisation, la rondelle est dépourvue de la partie arrière 86. Dans ce cas, la butée qui maintient le roulement 30 à l'intérieur de la section tubulaire 72 est par exemple réalisée par un usinage sur l'arbre 40.

En variantes, le diamètre de la rondelle est bien plus petit que le diamètre du moyeu 26. Par exemple, le diamètre D₁₀₂ est inférieur au diamètre D₇₄ - µ, où µ est supérieur ou égal à 2 mm et, par exemple, supérieur ou égal à 4 mm ou 5 mm.

En variantes, la nervure 112 est omise. Dans ce cas, la poussière conductrice est essentiellement stockée et retenue à l'intérieur de la cavité 122.

Dans une autre variante, c'est la nervure 110 qui est omise.

Au moins l'une des nervures 110 et 112 peut être légèrement inclinée par rapport à la direction Z. Dans ce cas, de préférence, cette nervure est inclinée vers l'axe 8.

De nombreux autres modes de réalisation des pales 114 sont possibles. Par exemple, dans un mode de réalisation particulier, le côté extérieur des pales 114 ne touche pas la nervure 112 et/ou le côté intérieur des pales 114 ne touche pas la nervure 110.

Dans un autre mode de réalisation, les pales 114 ne s'étendent pas le long d'une direction radiale mais s'étendent le long d'une direction légèrement inclinée par rapport à cette direction radiale.

Les pales 114 peuvent aussi, en variantes, être inclinées par rapport à la direction Z.

La gorge 116 peut être omise.

### Chapitre II.2 : Variantes du flasque 18 :

Dans un mode de réalisation simplifié, la bordure 90 est omise.

De façon similaire, les cheminées 130 et 132 peuvent aussi être omises.

Le nombre de cheminées de vissage prévu dans le flasque 18 dépend du nombre de vis utilisées pour fixer ce flasque sur le stator. Ainsi, le nombre de cheminées peut être supérieur ou égal à trois ou au contraire égal à un.

La hauteur des cheminées 130, 132 n'est pas nécessairement égale à la hauteur de la bordure 90. En variante, la hauteur des cheminées 130, 132 est supérieure ou inférieure à la hauteur de la bordure 90.

Les nervures 124 peuvent être omises. Dans un autre mode de réalisation, le fond 62 est plat et la cavité 122 est omise. Dans ce cas, l'augmentation de la résistance au claquage est essentiellement due à la présence des pales 114 sur la rondelle 44.

### Chapitre II.3 : Autres variantes :

La machine à courant continu peut aussi être un moteur à excitation série dans lequel les aimants permanents du stator sont remplacés par des enroulements raccordés en série avec les enroulements rotoriques par l'intermédiaire des balais.

En variantes, les aimants permanents peuvent être remplacés par des bobines. Si ces bobines sont alimentées par un courant continu, alors il s'agit toujours d'une machine à excitation constante.

Les enroulements du stator peuvent aussi être raccordés en parallèle des enroulements rotoriques. Dans ce cas, il s'agit d'une machine connue sous le terme de machine à excitation « shunt ».

Les différents types de machine ci-dessus peuvent être combinés entre eux pour obtenir une machine à excitation composée ou « compound » en anglais.

Ce qui a été décrit ici s'applique aussi bien à une machine fonctionnant comme un moteur que comme un générateur qui convertit de l'énergie mécanique en électricité.

Dans un autre mode de réalisation, le rotor 6 prend la forme d'un disque. Dans ce cas, le champ magnétique induit par le stator est principalement parallèle à l'axe 8 et non pas perpendiculaire à cet axe comme dans les modes de réalisation précédemment décrits.

En variante, la platine 12 est omise. Dans ce cas, l'arbre 40 du rotor peut déboucher du côté du flasque 20 au lieu de déboucher du côté du flasque 18. Dans une autre variante, le rotor 40 débouche des deux côtés opposés de la machine.

Les différents modes de réalisations et variantes décrits ici peuvent être combinés entre eux.

### Chapitre III : Avantages des modes de réalisation décrits :

Les pales 114 tournées vers le collecteur 42 crée, lorsque le rotor 6 tourne, un courant d'air qui éloigne la poussière conductrice du roulement 30. Il a été observé que grâce à la présence de la rondelle 44 équipée de pales 114 entre le collecteur 42 et le roulement 30, la résistance au claquage de la machine à courant continu à balais est substantiellement améliorée et cela tout en conservant une alimentation en haute tension et l'étanchéité de la machine.

La présence de la nervure 112 permet de retenir une partie de la poussière conductrice à un emplacement où celle-ci ne dégrade pas la résistance au claquage de la machine.

Le fait que la nervure 112 soit reçue à l'intérieur de l'orifice central 60 de la plaque 34 et que le jeu entre cette nervure 112 et cet orifice 60 soit inférieur à 1 mm, empêche encore plus efficacement la poussière conductrice d'atteindre le roulement 30.

Le fait que le côté extérieur des pales 114 touche la nervure 112 permet de définir les compartiments 118. Ces compartiments 118 permettent de retenir encore plus efficacement la poussière conductrice stockée sur la face avant 104 de la rondelle 44.

La gorge 116 permet d'augmenter la longueur des lignes de fuite et améliore donc la résistance au claquage de la machine 2.

Le fait que le jeu entre la périphérie extérieure du disque 102 et la périphérie intérieure en vis-à-vis du moyeu 26 soit inférieur à 1 mm de large permet de diminuer encore plus la quantité de poussière conductrice susceptible d'atteindre le roulement 30. Cela permet également d'améliorer l'isolation électrique entre le roulement 30 et le collecteur 42. Enfin, cela permet de diminuer l'encombrement de la machine 2 par rapport au cas où la rondelle 44 ne serait pas reçue, au moins en partie, à l'intérieur du moyeu 26.

Le fait que la partie arrière 86 vienne directement en appui sur la bague intérieure 82 permet à la rondelle 44 de remplir en plus la fonction de butée pour retenir le roulement 30 coincé à l'intérieur du moyeu 26. Ainsi, il n'est pas nécessaire, par exemple, de prévoir une telle butée directement usinée dans l'arbre 40.

La cavité 122 permet de stocker plus de poussière conductrice à un emplacement qui n'est pas gênant pour le fonctionnement de la machine 2. Cela améliore donc la résistance au claquage de cette machine.

Le fait que la cavité 122 soit en plus recouverte par la plaque 34 permet de retenir encore plus efficacement la poussière conductrice stockée à l'intérieur de cette cavité.

La présence de la bordure 90 permet d'augmenter sensiblement la longueur des lignes de fuite susceptibles de raccorder électriquement le potentiel du collecteur 42 au potentiel de l'armature 10. Par conséquent, cela augmente la résistance au claquage de la machine 2. De plus, le fait que cette bordure ne forme qu'un seul bloc de matière avec le fond 62 du flasque 18 simplifie le montage de la machine 2.

Les cheminées 130 et 132 de vissage permettent d'augmenter sensiblement la longueur des lignes de fuite susceptibles de raccorder électriquement le potentiel du collecteur 42 au potentiel des vis reçues à l'intérieur de ces cheminées. Elle renforce donc également la résistance au claquage de la machine 2.

## Revendications

1. Machine à courant continu à balais présentant un indice de protection supérieur ou égal à l'indice IP54 et adaptée pour être alimentée par une tension d'alimentation supérieure à 72 Vdc, cette machine comportant :
- un stator (4) équipé :
• d'aimants permanents (22, 24) ou d'enroulements statoriques aptes à induire un flux magnétique,
• d'un premier et d'un second flasques (18, 20) d'extrémité comportant, respectivement, un premier et un second moyeux (26, 28),
• de balais (36, 38),
- un rotor bobiné (6) équipé :
• d'enroulements rotoriques (46, 48),
• d'un arbre (40), et
• d'un collecteur (42) situé en vis-à-vis des balais (36, 38) du stator (4) et sur lequel les balais (36, 38) frottent pour alimenter les enroulements rotoriques (46, 48),
- un premier et un second roulements (30, 32) dans lesquels sont montées des extrémités respectives de l'arbre (40), ces premier et second roulements (30, 32) étant reçus à l'intérieur, respectivement, des premier et second moyeux (26, 28),
**caractérisé en ce que** :
- au moins le premier flasque (18) est réalisé dans un matériau électriquement isolant dont la résistivité électrique à 20°C est supérieure à 10⁵Ω•m, et
- le rotor (6) comporte également une rondelle (44) en matériau électriquement isolant dont la résistivité électrique à 20°C est supérieure à 10⁵Ω•m, fixée sans aucun degré de liberté sur l'arbre (40) du rotor (6), cette rondelle (44) :
• étant interposée entre le collecteur (42) et le premier roulement (30), et
• comportant une face avant (104) tournée vers le collecteur (42) et des pales (114) faisant sailli sur cette face avant (104).

2. Machine selon la revendication 1, dans laquelle la rondelle (44) comporte également une nervure circulaire extérieure (112) faisant sailli sur sa face avant, la hauteur de cette nervure circulaire extérieure (112) dans une direction parallèle à l'axe (8) de rotation de l'arbre (40) étant supérieure à 1 mm.

3. Machine selon la revendication 2, dans laquelle :
- le stator (4) comporte une plaque (34), en matériau électriquement isolant, fixée sans aucun degré de liberté sur le premier flasque (18) d'extrémité, cette plaque (34) présentant une face avant tournée vers le collecteur (42) et sur laquelle sont fixés sans aucun degré de liberté les balais (36, 38) et cette plaque (34) comporte un orifice central (60) traversé de part en part par l'arbre (40) du rotor (4),
- la nervure circulaire extérieure (112) est reçue à l'intérieur de cet orifice central (60) de la plaque (34), la périphérie extérieure de la nervure circulaire extérieure (112) étant séparée de la périphérie intérieure en vis-à-vis de l'orifice central (60) par un jeu inférieur à 1 mm de large.

4. Machine selon la revendication 2 ou 3, dans laquelle les pales (114) sont situées entre l'arbre (40) et la nervure circulaire extérieure (112) et chaque pale (114) s'étend en direction de l'arbre (40) depuis un côté extérieur en contact directement avec la nervure circulaire extérieure (112).

5. Machine selon l'une quelconque des revendications précédentes, dans laquelle la rondelle (44) comporte au moins une gorge circulaire (116) creusée dans sa face avant et faisant le tour complet de l'arbre (40), cette gorge (116) étant située entre les pales (114) et la périphérie extérieure de cette face avant.

6. Machine selon l'une quelconque des revendications précédentes, dans laquelle la rondelle (44) comporte un disque (102) reçu à l'intérieur du premier moyeu (26), la périphérie extérieure de ce disque (102) étant séparée de la périphérie intérieure en vis-à-vis du premier moyeu (26) par un jeu inférieur à 1 mm de large.

7. Machine selon l'une quelconque des revendications précédentes, dans laquelle le premier roulement (30) comporte:
- une bague intérieure (82) directement en appui mécanique sur l'extrémité de l'arbre(40),
- une bague extérieure (80) directement en appui sur le premier moyeu (26), et
- la rondelle (44) comporte, du côté opposé à sa face avant, une partie arrière (86) qui vient directement en appui mécanique uniquement sur la bague intérieure (82).

8. Machine selon l'une quelconque des revendications précédentes, dans laquelle le premier flasque (18) d'extrémité comporte:
- un fond (62) tourné vers le collecteur (42),
- une ouverture centrale (64) correspondant à l'emplacement où le premier moyeu (26) débouche à l'intérieur de ce fond (62), et
- au moins une cavité (122) d'au moins 0,5 mm de profondeur aménagée dans ce fond (62) et ce ou ces cavités étant réparties autour de l'ouverture centrale de manière à stocker la poussière conductrice générée par le frottement des balais (36, 38) sur le collecteur (42).

9. Machine selon la revendication 8, dans laquelle :
- le stator (4) comporte une plaque (34) en matériau électriquement isolant dont la résistivité électrique à 20°C est supérieure à 10⁵ Ω•m, fixée sans aucun degré de liberté sur le fond (62) du premier flasque (18) d'extrémité, cette plaque (34) présentant une face avant tournée vers le collecteur (42) et sur laquelle sont fixés sans aucun degré de liberté les balais (36, 38), et cette plaque (34) recouvrant complètement ladite au moins une cavité (122) aménagée dans le fond du premier flasque (18) d'extrémité, et
- le stator (4) comporte également un passage aménagé sur la périphérie extérieure de la plaque (34) et raccordant fluidiquement ladite au moins une cavité (122) à l'espace à l'intérieur duquel est situé le collecteur (42).

10. Machine selon l'une quelconque des revendications précédentes, dans laquelle le premier flasque (18) d'extrémité comporte:
- un fond (62) tourné vers le collecteur (42), et
- une bordure (90) qui s'étend continûment le long de toute la périphérie extérieure du fond (62), cette bordure s'étendant également continûment, dans une direction axiale parallèle à l'axe de rotation de l'arbre (40) du rotor (6) et dirigée du premier flasque (18) vers le second flasque (20), depuis le fond (62) du premier flasque (18) jusqu'à une limite supérieure (92), la projection orthogonale de cette limite supérieure sur l'axe de rotation de l'arbre (40) étant située au-dessus, dans la direction axiale, de la projection orthogonale d'une limite supérieure du collecteur (42) sur le même axe

11. Machine selon la revendication 10, dans laquelle le premier flasque (18) comporte une ou plusieurs cheminées (130, 132) de vissage aptes chacune à recevoir une vis de fixation du premier flasque (18) sur le stator (4), chaque cheminée s'étendant continûment, dans la direction axiale, depuis le fond (62) du premier flasque (18) jusqu'à une limite supérieure, la projection orthogonale de cette limite supérieure de la cheminée sur l'axe de rotation de l'arbre (40) étant située au-dessus, dans la direction axiale, de la projection orthogonale de la limite supérieure du collecteur (42) sur le même axe

12. Machine selon la revendication 10 ou 11, dans laquelle
- le stator (4) comporte une armature rigide (10) en matériau électriquement conducteur à chaque extrémité de laquelle sont fixés, respectivement les premier et second flasques (18, 20) d'extrémité, et
- les balais (36, 38) et le collecteur (42) sont logés à l'intérieur de cette armature (10), et
- la bordure (90) s'étend entre l'armature (10) et les balais (36, 38) pour isoler électriquement cette armature des balais (36, 38).

## Patentansprüche

1. Gleichstrommaschine mit Bürsten, die eine Schutzklasse größer als oder gleich Klasse IP54 aufweist und dazu angepasst ist, durch eine Versorgungsspannung größer als 72 VDC gespeist zu werden, wobei diese Maschine Folgendes umfasst:
- einen Stator (4), der mit Folgendem ausgerüstet ist:
• Permanentmagneten (22, 24) oder Statorwicklungen, die dazu fähig sind, einen Magnetfluss zu induzieren,
• einem ersten und einem zweiten Endflansch (18, 20), die eine erste bzw. eine zweite Nabe (26, 28) umfassen,
• Bürsten (36, 38),
- einen Spulenrotor (6), der mit Folgendem ausgerüstet ist:
• Rotorwicklungen (46, 48),
• einer Welle (40) und
• einem Kollektor (42), der gegenüber den Bürsten (36, 38) des Stators (4) angeordnet ist und auf dem die Bürsten (36, 38) reiben, um die Rotorwicklungen (46, 48) zu speisen,
- ein erstes und ein zweites Lager (30, 32), in denen ein jeweiliges Ende der Welle (40) montiert ist, wobei dieses erste und dieses zweite Lager (30, 32) im Inneren der ersten bzw. der zweiten Nabe (26, 28) aufgenommen sind,
**dadurch gekennzeichnet, dass**:
- mindestens der erste Flansch (18) aus einem elektrisch isolierenden Material hergestellt ist, dessen spezifischer elektrischer Widerstand bei 20 °C größer als 10⁵ Q•m ist, und
- der Rotor (6) auch eine Scheibe (44) aus einem elektrisch isolierenden Material, dessen spezifischer elektrischer Widerstand bei 20 °C größer als 10⁵ Q•m ist, umfasst, die ohne jeglichen Freiheitsgrad an der Welle (40) des Rotors (6) befestigt ist, wobei diese Scheibe (44):
• zwischen dem Kollektor (42) und dem ersten Lager (30) eingefügt ist und
• eine vordere Fläche (104), die zu dem Kollektor (42) zeigt, und Schaufeln (114), die von dieser vorderen Fläche (104) vorspringen, umfasst.

2. Maschine nach Anspruch 1, wobei die Scheibe (44) auch eine außen liegende kreisförmige Rippe (112) umfasst, die auf ihrer vorderen Fläche vorspringt, wobei die Höhe dieser außen liegenden kreisförmigen Rippe (112) in einer zu der Drehachse (8) der Welle (40) parallelen Richtung größer als 1 mm ist.

3. Maschine nach Anspruch 2, wobei:
- der Stator (4) eine Platte (34) aus einem elektrisch isolierenden Material umfasst, die ohne jeglichen Freiheitsgrad an dem ersten Endflansch (18) befestigt ist, wobei diese Platte (34) eine vordere Fläche aufweist, die zu dem Kollektor (42) zeigt und an der ohne jeglichen Freiheitsgrad die Bürsten (36, 38) befestigt sind, und wobei diese Platte (34) eine zentrale Öffnung (60) umfasst, durch die die Welle (40) des Rotors (4) vollständig hindurchgeht,
- die außen liegende kreisförmige Rippe (112) im Inneren dieser zentralen Öffnung (60) der Platte (34) aufgenommen ist, wobei der Außenumfang der außen liegenden kreisförmigen Rippe (112) von dem gegenüberliegenden Innenumfang der zentralen Öffnung (60) durch ein Spiel kleiner als 1 mm getrennt ist.

4. Maschine nach Anspruch 2 oder 3, wobei die Schaufeln (114) zwischen der Welle (40) und der außen liegenden kreisförmigen Rippe (112) angeordnet sind und sich jede Schaufel (114) von einer Außenseite in direktem Kontakt mit der außen liegenden kreisförmigen Rippe (112) in Richtung der Welle (40) erstreckt.

5. Maschine nach einem der vorhergehenden Ansprüche, wobei die Scheibe (44) mindestens eine kreisförmige Nut (116) umfasst, die in ihre vordere Fläche eingelassen ist und vollständig um die Welle (40) herumführt, wobei diese Nut (116) zwischen den Schaufeln (114) und dem Außenumfang dieser vorderen Fläche angeordnet ist.

6. Maschine nach einem der vorhergehenden Ansprüche, wobei die Scheibe (44) einen Teller (102) umfasst, der im Inneren der ersten Nabe (26) aufgenommen ist, wobei der Außenumfang dieses Tellers (102) von dem gegenüberliegenden Innenumfang der ersten Nabe (26) durch ein Spiel kleiner als 1 mm getrennt ist.

7. Maschine nach einem der vorhergehenden Ansprüche, wobei das erste Lager (30) Folgendes umfasst:
- einen Innenring (82), der an dem Ende der Welle (40) direkt mechanisch anliegt,
- einen Außenring (80), der an der ersten Nabe (26) direkt anliegt, und
- wobei die Scheibe (44) auf der ihrer vorderen Fläche entgegengesetzten Seite einen hinteren Abschnitt (86) umfasst, der nur an dem Innenring (82) direkt mechanisch anliegt.

8. Maschine nach einem der vorhergehenden Ansprüche, wobei der erste Endflansch (18) Folgendes umfasst:
- einen Boden (62), der zu dem Kollektor (42) zeigt,
- eine zentrale Öffnung (64), die der Stelle entspricht, an der die erste Nabe (26) in das Innere dieses Bodens (62) mündet, und
- mindestens einen Hohlraum (122) mit einer Tiefe von mindestens 0,5 mm, der in diesem Boden (62) eingerichtet ist, und wobei dieser eine oder diese mehreren Hohlräume um die zentrale Öffnung herum verteilt sind, um den leitfähigen Staub, der durch das Reiben der Bürsten (36, 38) auf dem Kollektor (42) erzeugt wird, aufzunehmen.

9. Maschine nach Anspruch 8, wobei:
- der Stator (4) eine Platte (34) aus einem elektrisch isolierenden Material, dessen spezifischer elektrischer Widerstand bei 20 °C größer als 10⁵ Q•m ist, umfasst, die ohne jeglichen Freiheitsgrad an dem Boden (62) des ersten Endflansches (18) befestigt ist, wobei diese Platte (34) eine vordere Fläche aufweist, die zu dem Kollektor (42) zeigt und an der ohne jeglichen Freiheitsgrad die Bürsten (36, 38) befestigt sind, und wobei diese Platte (34) den mindestens einen Hohlraum (122), der in dem Boden des ersten Endflansches (18) eingerichtet ist, vollständig abdeckt, und
- der Stator (4) auch einen Durchgang umfasst, der an dem Außenumfang der Platte (34) eingerichtet ist und den mindestens einen Hohlraum (122) mit dem Raum, in dessen Inneren der Kollektor (42) angeordnet, fluidisch verbindet.

10. Maschine nach einem der vorhergehenden Ansprüche, wobei der erste Endflansch (18) Folgendes umfasst:
- einen Boden (62), der zu dem Kollektor (42) zeigt, und
- eine Umrandung (90), die sich kontinuierlich entlang dem gesamten Außenumfang des Bodens (62) erstreckt, wobei sich diese Umrandung auch in einer zu der Drehachse der Welle (40) des Rotors (6) parallelen axialen Richtung, die von dem ersten Flansch (18) zu dem zweiten Flansch (20) gerichtet ist, kontinuierlich von dem Boden (62) des ersten Flansches (18) bis zu einer oberen Begrenzung (92) erstreckt, wobei die orthogonale Projektion dieser oberen Begrenzung auf die Drehachse der Welle (40) in axialer Richtung oberhalb der orthogonalen Projektion einer oberen Begrenzung des Kollektors (42) auf dieselbe Achse angeordnet ist.

11. Maschine nach Anspruch 10, wobei der erste Flansch (18) einen oder mehrere Verschraubungsschächte (130, 132) umfasst, die dazu fähig sind, jeweils eine Schraube zur Befestigung des ersten Flansches (18) an dem Stator (4) aufzunehmen, wobei sich jeder Schacht in axialer Richtung kontinuierlich von dem Boden (62) des ersten Flansches (18) bis zu einer oberen Begrenzung erstreckt, wobei die orthogonale Projektion dieser oberen Begrenzung des Schachts auf die Drehachse der Welle (40) in axialer Richtung oberhalb der orthogonalen Projektion einer oberen Begrenzung des Kollektors (42) auf dieselbe Achse angeordnet ist.

12. Maschine nach Anspruch 10 oder 11, wobei
- der Stator (4) ein starres Gestell (10) aus einem elektrisch leitfähigen Material umfasst, an dessen jeweiligen Enden der erste bzw. der zweite Endflansch (18, 20) befestigt sind, und
- die Bürsten (36, 38) und der Kollektor (42) im Inneren dieses Gestells (10) untergebracht sind und
- sich die Umrandung (90) zwischen dem Gestell (10) und den Büsten (36, 38) erstreckt, um dieses Gestell von den Bürsten (36, 38) elektrisch zu isolieren.

## Claims

1. Direct current machine with brushes having a protection index greater than or equal to the IP54 index and suitable for being powered by a power supply voltage greater than 72 Vdc, this machine comprising:
- a stator (4) equipped:
• with permanent magnets (22, 24) or stator windings capable of inducing a magnetic flux,
• with a first and a second end flange (18, 20) comprising, respectively, a first and a second hub (26, 28),
• with brushes (36, 38),
- a wound rotor (6) equipped:
• with rotor windings (46, 48),
• with a shaft (40), and
• with a collector (42) situated facing the brushes (36, 38) of the stator (4) and on which the brushes (36, 38) rub to power the rotor windings (46, 48),
- a first and a second bearing (30, 32) in which respective ends of the shaft (40) are fitted, these first and second bearings (30, 32) being received in, respectively, the first and second hubs (26, 28),
**characterized in that**:
- at least the first flange (18) is produced in an electrically insulating material whose electrical resistivity at 20°C is greater than 10⁵ Ω•m, and
- the rotor (6) also comprises a washer (44) made of electrically insulating material whose electrical resistivity at 20°C is greater than 10⁵ Ω•m, fixed with no degree of freedom onto the shaft (40) of the rotor (6), this washer (44):
• being interposed between the collector (42) and the first bearing (30), and
• comprising a front face (104) turned towards the collector (42) and blades (114) protruding on this front face (104).

2. Machine according to Claim 1, wherein the washer (44) also comprises an outer circular rib (112) protruding on its front face, the height of this outer circular rib (112) in a direction parallel to the axis (8) of rotation of the shaft (40) being greater than 1 mm.

3. Machine according to Claim 2, wherein:
- the stator (4) comprises a plate (34), made of electrically insulating material, fixed with no degree of freedom onto the first end flange (18), this plate (34) having a front face turned towards the collector (42) and on which the brushes (36, 38) are fixed with no degree of freedom, and this plate (34) comprises a central orifice (60) passed right through by the shaft (40) of the rotor (4),
- the outer circular rib (112) is received in this central orifice (60) of the plate (34), the outer periphery of the outer circular rib (112) being separated from the inner periphery facing the central orifice (60) by a gap less than 1 mm wide.

4. Machine according to Claim 2 or 3, wherein the blades (114) are situated between the shaft (40) and the outer circular rib (112) and each blade (114) extends towards the shaft (40) from an outer side in direct contact with the outer circular rib (112).

5. Machine according to any one of the preceding claims, wherein the washer (44) comprises at least one circular groove (116) hollowed out in its front face and completely encircling the shaft (40), this groove (116) being situated between the blades (114) and the outer periphery of this front face.

6. Machine according to any one of the preceding claims, wherein the washer (44) comprises a disc (102) received in the first hub (26), the outer periphery of this disc (102) being separated from the inner periphery facing the first hub (26) by a gap less than 1 mm wide.

7. Machine according to any one of the preceding claims, wherein the first bearing (30) comprises:
- an inner ring (82) directly bearing mechanically on the end of the shaft (40),
- an outer ring (80) directly bearing on the first hub (26), and
- the washer (44) comprises, on the side opposite its front face, a rear part (86) which comes to bear directly mechanically only on the inner ring (82).

8. Machine according to any one of the preceding claims, wherein the first end flange (18) comprises:
- a bottom (62) turned towards the collector (42),
- a central aperture (64) corresponding to the location where the first hub (26) emerges inside this bottom (62), and
- at least one cavity (122) of at least 0.5 mm depth formed in this bottom (62) and this or these cavities being distributed around the central aperture so as to store the conductive dust generated by the rubbing of the brushes (36, 38) on the collector (42).

9. Machine according to Claim 8, wherein:
- the stator (4) comprises a plate (34) made of electrically insulating material whose electrical resistivity at 20°C is greater than 10⁵ Ω•m, fixed with no degree of freedom onto the bottom (62) of the first end flange (18), this plate (34) having a front face turned towards the collector (42) and to which the brushes (36, 38) are fixed with no degree of freedom, and this plate (34) completely covering said at least one cavity (122) formed in the bottom of the first end flange (18), and
- the stator (4) also comprises a passage formed on the outer periphery of the plate (34) and fluidically connecting said at least one cavity (122) to the space in which the collector (42) is situated.

10. Machine according to any one of the preceding claims, wherein the first end flange (18) comprises:
- a bottom (62) turned towards the collector (42), and
- a rim (90) which extends continually along all of the outer periphery of the bottom (62), this rim extending also continually, in an axial direction parallel to the axis of rotation of the shaft (40) of the rotor (6) and directed from the first flange (18) towards the second flange (20), from the bottom (62) of the first flange (18) to an upper limit (92), the orthogonal projection of this upper limit on the axis of rotation of the shaft (40) being situated above, in the axial direction, the orthogonal projection of an upper limit of the collector (42) on the same axis.

11. Machine according to Claim 10, wherein the first flange (18) comprises one or more screw shafts (130, 132) each capable of receiving a screw for fixing the first flange (18) onto the stator (4), each shaft extending continually, in the axial direction, from the bottom (62) of the first flange (18) to an upper limit, the orthogonal projection of this upper limit of the shaft on the axis of rotation of the shaft (40) being situated above, in the axial direction, the orthogonal projection of the upper limit of the collector (42) on the same axis.

12. Machine according to Claim 10 or 11, wherein
- the stator (4) comprises a rigid armature (10) made of electrically conductive material to each end of which there are fixed, respectively, the first and second end flanges (18, 20), and
- the brushes (36, 38) and the collector (42) are housed in this armature (10), and
- the rim (90) extends between the armature (10) and the brushes (36, 38) to electrically insulate this armature from the brushes (36, 38).
